# EUROPEAN PATENT SPECIFICATION

(11) **EP 3 904 809 B1**
(45) Date of publication and mention of the grant of the patent: **07.09.2022**
(21) Application number: 21167455.1
(22) Date of filing: 08.04.2021
(51) Int. Cl.: F28D 9/00

(54) **STRESS RELIEVING ADDITIVELY MANUFACTURED HEAT EXCHANGER FIN DESIGN**
DESIGN EINER SPANNUNGSENTLASTENDEN, GENERATIV GEFERTIGTEN WÄRMETAUSCHERRIPPE
CONCEPTION D'AILETTES D'ÉCHANGEUR DE CHALEUR FABRIQUÉES DE MANIÈRE ADDITIVE POUR SOULAGER LES CONTRAINTES

(30) Priority: 28.04.2020 US 202063016680 P
(43) Date of publication of application: 03.11.2021
(73) Proprietor: Hamilton Sundstrand Corporation, Charlotte, NC 28217-4578 (US)
(72) Inventor: COLSON, Paul M., Westfield, 01085 (US); NGATU, Grum, Manchester, 06042 (US); KOWALSKI, John W., Hadley, 01035 (US)
(74) Representative: Dehns

(56) References cited:
- EP-A2- 1 701 125
- WO-A1-2008/091918
- FR-A1- 3 058 510
- FR-A2- 2 380 524

## Description

### BACKGROUND

The present disclosure is directed generally to heat exchangers and, more specifically, to heat exchangers formed via additive manufacturing.

Plate-fin heat exchangers use plates and fins to transfer heat between adjacent flows of fluids. Conventional plate-fin heat exchangers are formed of sheet metal with brazed joints. Stresses tend to be higher at joints between the fin and plate, which can induce cracks and result in failure. The design of plate-fin heat exchangers has been limited by traditional manufacturing methods and by build constraints when produced by additive manufacturing methods, specifically, powder bed fusion. Additively manufactured designs often include fillets at fin corners to reduce stress concentrations. The manufacture of fillets and numerous small features greatly increases CAD and build file size as well as build time, which directly correlates to component cost. Additionally, there are limitations to the minimum thickness of features that can be made with additive manufacturing methods. WO 2008/091918 A1 discloses a heat exchanger having fins that contain a stress-concentration element therein.

### SUMMARY

According to a first aspect, there is provided a heat exchanger according to claim 1.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1 is a cross-sectional view of a fin design for a plate-fin heat exchanger of the prior art.
FIG. 2 is an isometric view of a fin design for a plate-fin heat exchanger according to one embodiment of the present disclosure.
FIG. 2A is an enlarged view of a region 2A identified in FIG. 2.
FIG. 3 is an isometric view of a fin design for a plate-fin heat exchanger according to another embodiment of the present disclosure.
FIG. 3A is an enlarged view of a region 3A identified in FIG. 3.
FIG. 4 is an isometric view of a fin design for a plate-fin heat exchanger according to yet another embodiment of the present disclosure.
FIG. 5 is an isometric view of a fin design for a plate-fin heat exchanger according to yet another embodiment of the present disclosure.
FIG. 6 is an isometric view of a fin design for a plate-fin heat exchanger according to yet another embodiment of the present disclosure.
FIG. 6A is an enlarged view of a region 6A identified in FIG. 6.
FIG. 7 is an isometric view of a heat exchanger section.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention as defined by the claims. The figures may not be drawn to scale, and applications and embodiments of the present invention may include features, steps and/or components not specifically shown in the drawings.

### DETAILED DESCRIPTION

The present disclosure is directed a fin design for a plate-fin heat exchanger that incorporates additively formed stress concentrations designed to fail and relieve local stresses without causing a leak between interfacing fluids. Prior additively manufactured designs include fillets at fin corners to reduce stress concentrations. The manufacture of fillets greatly increases CAD and build file size as well as build time. Fillets can be eliminated when the disclosed stress concentrations are incorporated into the fin. There is a need for heat exchanger designs that can improve operational life and capability of the component, can reduce weight of the component, and can be efficiently manufactured using additive manufacturing methods.

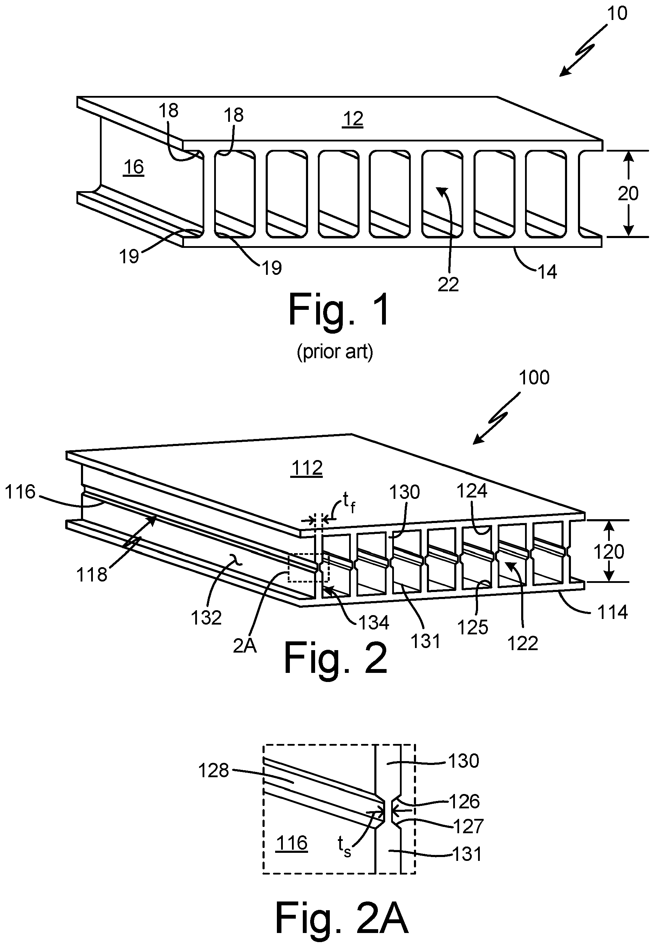

FIG. 1 is a cross-sectional view of a fin design for a plate-fin heat exchanger of the prior art. FIG. 1 shows heat exchanger portion 10, plates 12 and 14, fins 16, fillets 18 and 19, gap 20, and flow channels 22. Plate 12 is separated from plate 14 by gap 20. Fins 16 are disposed across gap 20, extending between and connected to plate 12 at one end and plate 14 at an opposite end. Fins 16 are spaced to form flow channels 22. Fins 16 are joined to plates 12 by fillets 18 located on each side of fin 16 and are joined to plate 14 by fillets 19 located on each side of fin 16. Fillets 18 and 19 reduce stress concentrations at the corner joints connecting fin 16 and plates 12 and 14. Fins 16 have uniform thickness extending between fillets 18 and 19. Fillets 18 and 19 at fin corners reduce stress concentrations in this region. The manufacture of fillets 18 and 19, however, greatly increases CAD and build file size as well as build time.

FIGS. 2-6 illustrate varying fin designs for a plate-fin heat exchanger, which eliminate the need for fillets at the junction between fins and plates. Each of the disclosed fin designs incorporates an additively formed stress concentration designed to fail and relieve local stresses without causing a leak between interfacing fluids. The stress concentration elements are located away from structural walls (i.e., plates) where stresses could cause further crack propagation after failure. Varying patterns of fin thickness, geometry, and stress concentration shaped features are disclosed to control fin stiffness, minimize the probability of cracking, as well as the size, relative location, and quality of cracks so that they occur in areas of low risk (i.e., minimal impact to design service life of the heat exchanger). The stiffness of internal structures can be tuned to minimize maximum stress and to allow for deformation in specific areas that require flexibility due to the applied loads during operation. Fins can be designed to relieve local stresses and to reduce the propagation of cracks after failure. Fins can be designed to fail in such a way that fins do not block flow channels when they fail or fully rupture. The disclosed plate-fin heat exchangers can be made using layer-by-layer additive manufacturing processes, including but not limited to laser powder bed fusion.

FIG. 2 is an isometric view of a fin design for a plate-fin heat exchanger according to one embodiment of the present disclosure. FIG. 2A is an enlarged view of a region 2A identified in FIG. 2. FIGS. 2 and 2A are discussed together. FIG. 2 shows heat exchanger portion 100, plates 112 and 114, fins 116, stress concentration element 118, gap 120, flow channels 122, and junctions 124 and 125. Stress concentration element includes chamfers 126 and 127 and region of reduced fin thickness 128. Fins 116 include sections 130 and 131 and opposite sides 132 and 134. FIG. 2A shows fin 116, including sections 130 and 131, and chamfers 126, 127 and region 128 of stress concentration element 118.

Plates 112 and 114 are separated by gap 120. Fins 116 extend between and connect plates 112 and 114 to form flow channels 122 defined between plates 112 and 114 and adjacent fins 116. Fins 116 are joined to plates 112 and 114 at junctions 124 and 125, respectively. A first section 130 of fins 116 extends between junction 124 and stress concentration element 118. A second section 131 of fins 116 extends between junction 125 and stress concentration element 118. First and second sections 130 and 131 transition to region 128 of reduced thickness via chamfers 126 and 127. During operation, a first fluid flows through channels 122 between plates 112 and 114 and a second fluid flows across outer surfaces of plates 112 and 114 opposite channels 122. Plates 112 and 114 serve as the interface between first and second fluids. Heat is transferred between plates 112 and 114 from one of the first and second fluids to the other of the first and second fluids.

Plate 112 is separated from plate 114 by gap 120. Plate 112 extends parallel to plate 114. Fins 116 are disposed across gap 120, extending between and connected to plate 112 at one end and plate 114 at an opposite end. Fins 116 are disposed transverse to plates 112 and 114. Fins 116 extend a length of plates 112 and 114. Fins 116 are disposed in rows separated by flow channels 122. Adjacent fins 116 are spaced apart to form flow channels 122. The number of fins and spacing distance can be selected based on operational requirements, including static and dynamic loads. In some embodiments, fins 116 can be spaced apart 0.005-3.0 inches (0.127-76.2 millimeters) Fins 116 are joined to plates 112 at junction 124 and are joined to plate 114 at junction 125. Junctions 124 and 125 are free of fillets. Junctions 124 and 125 form right angles between fins 116 and plates 112 and 114. Fin thickness t*_{ƒ}* remains substantially uniform in first section 130 between junction 124 and stress concentration element 118 and in second section 131 between junction 125 and stress concentration element 118. Fin thickness *t_{ƒ}* can be selected to accommodate thermal and structural loading. Fin thickness *t_{f}* can vary from one region of a heat exchanger to another to account for variations in thermal and structural loads. In some embodiments, fin thickness *t_{ƒ}* can range from 0.001-0.375 inches (0.025-9.53 millimeters).

Stress concentration element 118 is disposed on fin 116 between junctions 124 and 125. Stress concentration element 118 can be centrally located between junctions 124 and 125 or can be positioned closer to either of junctions 124 or 125. The location of stress concentration 118 can be selected to relieve local stresses without causing a leak between interfacing fluids. Stress concentration element 118 is located away from plates 112 and 114 where stresses could cause further crack propagation after failure.

Stress concentration element 118 includes region 128, which is a region of reduced fin thickness. Region 128 extends parallel to plates 112 and 114 and may extend along a full length of fin 116. Fin 116 has thickness *tₛ* in region 128 of stress concentration element 118 which is less than fin thickness *t_{f}.* Thickness *tₛ* in region 128 can be selected based on dynamic operational loads to fail or crack to relieve local stresses before failure occurs at junctions 124 and 125, which could cause a leak between interfacing fluids on opposite sides of plates 112 and 114. In some embodiments, thickness *tₛ* can be approximately half of fin thickness *t_{f}.* In some embodiments, the ratio of fin thickness *t_{f}* to thickness *tₛ* can range from 1.05-20. The size of reduced thickness *tₛ* can be selected based on local stresses, overall structural strength and stiffness, and material mechanical properties.

Region 128 can be formed by a recess extending from one or both sides 132, 134 of fins 116. Side 132 of fin 116 is disposed opposite of side 134. As illustrated in FIG. 2, sides 132 and 134 of fin 116 are both recessed in an equal amount to form region 128 of stress concentration element 118. In alternative embodiments, one of sides 132 or 134 can be recessed to form region 128 or sides 132 and 134 can be recessed in unequal amounts such that region 128 is positioned closer to one of sides 132 or 134.

First sections 130 and 131 can join region 128 by chamfers 126 and 127, respectively. Chamfers 126 and 127 provide a linear transition between each of first sections 130 and 131 having thickness *t_{ƒ}* and region 128 of reduced thickness *tₛ*. Chamfers 126 and 127 can reduce stress at junctions between fin sections 130, 131 and region 128 and localize stress concentration in region 128. Chamfers 126 and 127 do not have the same processing requirements as fillets and can be incorporated without significantly adding to build file size or build time. Stress concentration element 118 can be disposed over less than 70 percent of a height of fin 116 extending between plates 112 and 114 (i.e., size of gap 120). A height *h* of region 128 is less than 50 percent of the height of fin 116. In some embodiments, a height *h* of region 128 is less than 20 percent of the height of fin 116. In some embodiments, region 128 has a height 0.003-4.5 inches and fins 116 have a height between 0.005-5 inches (0.127-127 millimeters).

Heat exchanger portion 100 can relieve local stresses without causing a leak between interfacing fluids. The fin design of heat exchanger portion 100 concentrates stress away from structural plates 112 and 114 and junctions 124 and 125 where stresses could cause further crack propagation after failure. Any failure caused by dynamic operational loads will occur at stress concentration element 118 and, particularly, at region 128. Cracks that form will have a tendency to propagate along region 128 where fin thickness is reduced thereby limiting risk of damage at junctions 124 and 125, which could result in leaks of interfacing fluids.

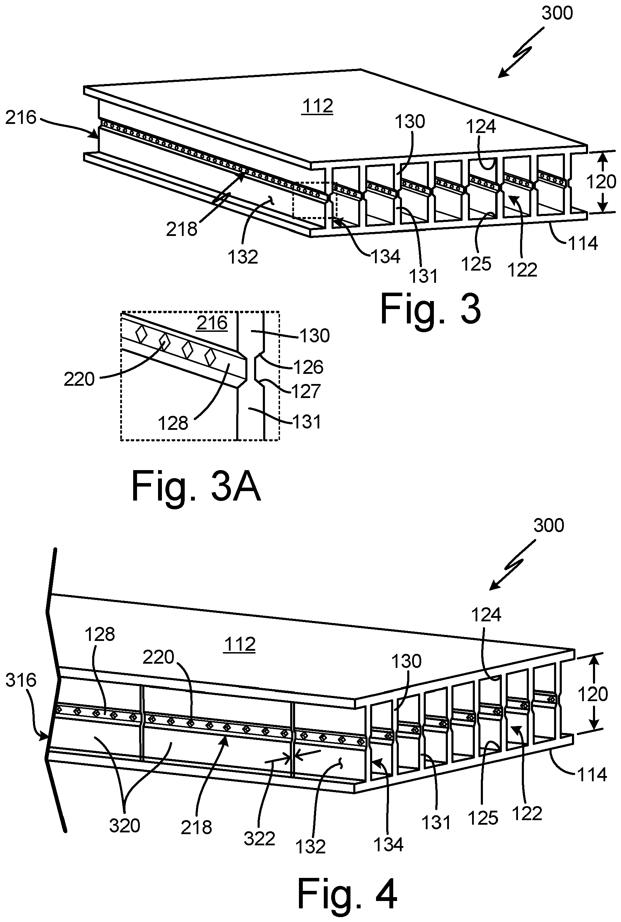

FIG. 3 is an isometric view of a fin design for a plate-fin heat exchanger according to another embodiment of the present disclosure. FIG. 3A is an enlarged view of a region 3A identified in FIG. 3. FIGS. 3 and 3A are discussed together. FIG. 3 shows heat exchanger portion 200. Heat exchanger portion 200 is substantially the same as heat exchanger portion 100 shown in FIG. 2 with a modified stress concentration element 218. FIG. 3 shows plates 112 and 114, fins 116, gap 120, flow channels 122, junctions 124 and 125, sections 130 and 131, and opposite sides 132 and 134. These features are described in the discussion of FIG. 2. FIG. 3 shows stress concentration element 218. Stress concentration element 218 includes chamfers 126 and 127 and region 128 of reduced thickness, as described in the discussion of FIG. 2. Stress concentration element 218 additionally includes apertures 220. FIG. 3A shows fin 216, including sections 130 and 131, and chamfers 126, 127, region 128, and apertures 220 of stress concentration element 118.

Apertures 220 are disposed in region 128 and extend through fins 116 from side 132 to side 134. Apertures 220 can be spaced along a length of region 128 with uniform or nonuniform spacing. Apertures 220 can be aligned in single row running parallel to plates 112 and 114 with region 128. Apertures 220 can be centrally located in region 128 between chamfers 126 and 127. Apertures 220 can be diamond-shaped. In other embodiments, apertures can be any of a variety of shapes including circles, rectangles, and polygons of various arrangements.

Stress concentration element 218 is designed to concentrate stress at apertures 220. The location, size, and geometric shape of apertures 220 can be selected based on dynamic operational loads to fail or initiate cracking to relieve local stresses before failure occurs at junctions 124 and 125, which could cause a leak between interfacing fluids on opposite sides of plates 112 and 114. Additionally, the location, size, and geometric shape of apertures 220 can be selected to arrest crack propagation initiated at adjacent apertures 220. Heat exchanger portion 200 is designed such that any failure caused by dynamic operational loads will occur at stress concentration element 218 and, particularly, at apertures 220. Cracks that form will have a tendency to propagate along region 128 where fin thickness is reduced thereby limiting risk of damage at junctions 124 and 125, which could result in leaks of interfacing fluids. Adjacent apertures 220 can serve as stop holes, which can arrest crack propagation initiated at an adjacent aperture 220.

FIG. 4 is an isometric view of a fin design for a plate-fin heat exchanger according to yet another embodiment of the present disclosure. FIG. 4 shows heat exchanger portion 300. Heat exchanger portion 300 is substantially the same as heat exchanger portion 200 show in FIG. 3 with segmentation of fins 116 along the length of plates 112 and 114. FIG. 4 shows plates 112 and 114, gap 120, flow channels 122, junctions 124 and 125, sections 130 and 131, opposite sides 132 and 134, and stress concentration element 218. These features are described in the discussion of FIGS. 3 and 3A. FIG. 4 additionally shows fins 316, fin segments 320, and gaps 322.

Fins 316 are disposed in rows to form flow channels 122. Each fin 316 is split into fin segments 320 within each row. Fin segments 320 are separated by gaps 322. Fin segments 320 can be separated fully or partially between plates 112 and 114. As illustrated in FIG. 4, gaps 322 extends from plate 112 to plate 114. Gaps 322 can be disposed transverse to plates 112 and 114. Fin segments 320 can be rectangular in shape. Gaps 322 can have a constant width between plates 112 and 114. Gaps 322 can be narrow, having a width that limits fluid flow between rows of fins 316. In some embodiments, fin segments 320 can be separated by a distance (width) of at least 0.002 inches and less than 0.75 inches. The size and orientation of gaps 322 and fin segments 320 can be selected to optimize fluid dynamics within heat exchanger portion 300. In some embodiments, a ratio of fin height (gap size 120) to a width of gap 322 is in a range of 5-200.

As discussed with respect to heat exchanger portion 200, heat exchanger portion 300 is designed such that any failure caused by dynamic operational loads will occur at stress concentration element 218 and, particularly, at apertures 220. Cracks that form will have a tendency to propagate along region 128 where fin thickness is reduced thereby limiting risk of damage at junctions 124 and 125, which could result in leaks of interfacing fluids. Adjacent apertures 220 can serve as stop holes, which can arrest crack propagation initiated at an adjacent aperture 220. Gaps 322 additionally serve to arrest crack propagation along fin 316 and confine crack growth to single fin segments 320.

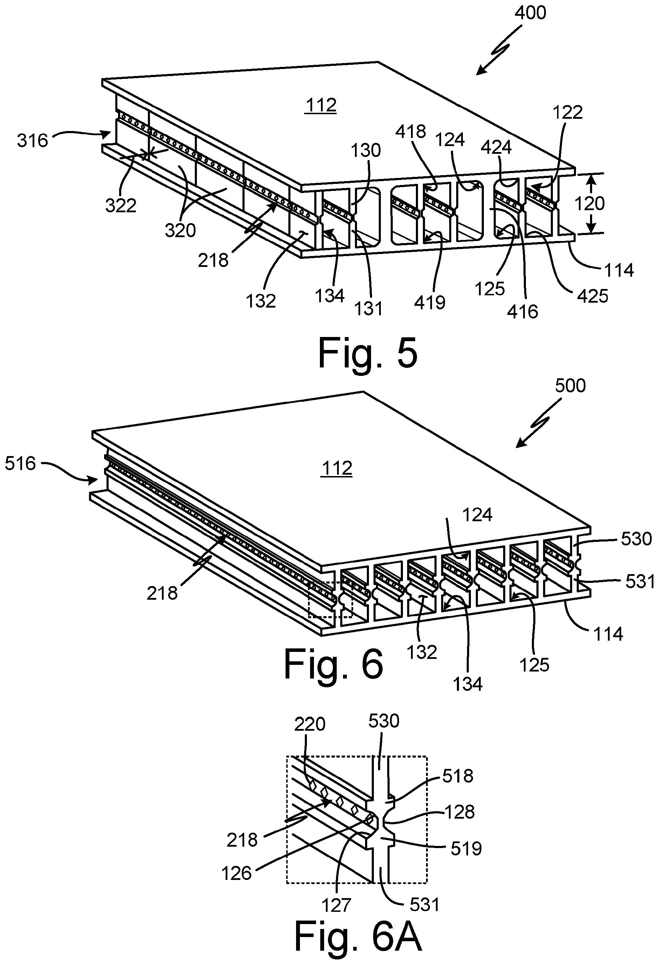

FIG. 5 is an isometric view of a fin design for a plate-fin heat exchanger according to yet another embodiment of the present disclosure. FIG. 5 shows heat exchanger portion 400. Heat exchanger portion 400 is substantially the same as heat exchanger portion 300 show in FIG. 4 with segmentation of fins 116 along the length of plates 112 and 114. FIG. 5 shows plates 112 and 114, gap 120, flow channels 122, junctions 124 and 125, sections 130 and 131, opposite sides 132 and 134, stress concentration element 218, fins 316, fin segments 320, and gap 322. These features are described in the discussion of FIGS. 3, 3A, and 4. FIG. 5 additionally shows fins 416, fillets 418 and 419, and junctions 424 and 425.

Fins 416 are disposed across gap 120, extending between and connected to plate 112 at one end and plate 114 at an opposite end. Fins 416 are disposed transverse to plates 112 and 114. Fins 416 extend parallel to fins 316 along a length of plates 112 and 114. Fins 416 can be disposed between fins 316 to form flow channels 122 there between. Fins 416 can be solid along the length of plates 112 and114 (e.g., free of gaps 322) such that a single fin 416 extends from a first end of plates 112, 114 to a second end of plates 112, 114. Fins 416 can be load bearing members, having a thickness *tₗ* greater than the thickness *t_{f} of* fins 316 at sections 130, 131. Fins 416 can have a substantially uniform or constant thickness *tₗ* between plates 112 and 114. Fins 416 can be joined to plates 112 and 114 by fillets 418 and 419, respectively. Fillets 418, 419 can be located on each side of fins 416. Fillets 418 and 419 form junctions 424 and 425, respectively, where fins 416 meet plates 112 and 114. Fillets 418 extend from one end of fin 416 to plate 112; fillets 419 extend from the opposite end of fin 416 to plate 114. Fins 418 are substantially similar to fins 18 of the prior art as shown in FIG. 1.

Fins 418 provide structural support to heat exchanger portion 400. Fins 416 are joined to plate 112 at junction 424 by fillet 418. Fins 416 are joined to plate 418 at junction 425 by fillet 419. Fillets 418 and 419 reduce the stress concentration at junctions 424 and 425 thereby limiting risk of damage at junctions 424 and 425, which could result in leaks of interfacing fluids. The number of fins 416 and spacing distance can be selected based on operational requirements, including static and dynamic loads. As illustrated in FIG. 5, two fins 416 are separated by two fins 318 with fins 416 positioned in a central region of heat exchanger portion 400. In alternative embodiments, fins 416 can be separated by more or less fins 316 and fins 416 can be positioned in different locations of heat exchanger portion 400. Fin thickness *tₗ* can be selected to provide structural support to heat exchanger portion 400. In some embodiments, fin thickness *tₗ* can be approximately twice the thickness of fins 318 in sections 130 and 131 (i.e., two times *t_{f}*)*.* Fin thickness *tₗ* can be selected based on structural strength and stiffness required in the heat exchanger. Fins 416 can be sized to avoid rupture of the heat exchanger at a specific pressure or temperature. A high pressure design may require an additional number of fins 416 or may require fins 416 having an increased thickness depending on the goals of the design (e.g., structure versus thermal/fluid performance).

FIG. 6 is an isometric view of a fin design for a plate-fin heat exchanger according to yet another embodiment of the present disclosure. FIG. 6A is an enlarged view of a region 6A identified in FIG. 6. FIGS. 6 and 6A are discussed together. FIG. 6 shows heat exchanger portion 500. Heat exchanger portion 500 is substantially the same as heat exchanger portion 200 show in FIG. 3 with additional crack arresting features. FIG. 6 shows plates 112 and 114, gap 120, flow channels 122, junctions 124 and 125, opposite sides 132 and 134, and stress concentration element 218, including chamfers 126 and 127, reduced thickness region 128, and apertures 220. These features are described in the discussion of FIGS. 3 and 3A. FIG. 6 additionally shows fins 516, projecting elements 518 and 519, and fin sections 530 and 531. FIG. 6A shows fin 516, including sections 530 and 531, projecting elements 518 and 519, and chamfers 126, 127, region 128, and apertures 220 of stress concentration element 218.

Projecting elements 518 and 519 are disposed on either side of stress concentration element 218 between plates 112 and 114. Projecting element 518 is positioned between plate 112 and stress concentration element 218. Projecting element 519 is positioned between plate 114 and stress concentration element 218. Projecting element 518 is joined to section 530 of fins 316. Projecting element 519 is joined to section 531 of fins 316. Projecting elements 518 and 519 can project outward from each of sides 132 and 134 of fins 516 and have a combined thickness *tₚ,* which is greater than fin thickness *t_{f}.* The extent to which each projecting element 518 and 519 extends from sides 132 and 134 can vary. The size and shape of projecting elements 518 and 518 can be selected based on the overall design goals, considering material properties, dynamic loading, thermal/fluid performance needs, and height, thickness, and build orientation of fins 516. In one embodiment, projecting element thickness *tₚ* can be approximately twice the fin thickness *t_{f}.* Generally, a ratio of projecting element thickness *tₚ* to fin thickness *t_{ƒ}* is 1.125-5. A height *hₚ* of projecting members can also be varied to meet design goals. Generally, a ratio of projecting element height *hₚ* to fin height 120 is 0.005-0.3. As illustrated in FIGS. 6 and 6A, projecting elements 518 and 519 are centered across fin sections 130 and 131. Projecting elements 518 and 519 can be disposed transverse to sections 130 and 131 and can extend a length of fins 518 parallel to plates 112 and 114. As such, projecting elements 518 and 519 can extend fully along stress concentration element 218. Projecting element 518 can be joined to region 128 of stress concentration element 218 by chamfer 126. Projecting element 519 can be joined to region 128 of stress concentration element 218 by chamfer 127. Chamfers 126 and 127 can extend from outer edges of projecting elements 518 and 519 to region 128 or can extend from a location on projecting elements 518 and 519 between the outer edges and region 128. The size of chamfers 126 and 127 can be selected to reduce stress at the junction between projecting elements 518, 519 and region 128, and localize stress concentration in region 128. Projecting element 518 can be joined to fin sections 530 and 531 by chamfers or corner joints.

Projecting elements 518 and 519 can serve to arrest crack propagation initiated in region 128 of stress concentration element 218 and confine crack propagation to the location of stress concentration element 218. Projecting elements 518 and 519 thereby further limit risk of damage at junctions 124 and 125, which could result in leaks of interfacing fluids.

Heat exchanger portions 100, 200, 300, 400, and 500 can be made via powder bed fusion additive manufacturing processes. Powder bed fusion is an additive manufacturing process in which three-dimensional (3-D) objects are produced from powder in a layer-by-layer fashion directly from a digital model. All powder or selective regions of powder in a powder layer can be fused by melting or sintering with a laser or electron beam as the heat source. CAD and build file size and build time can be reduced by limiting the geometry of a component to that which can be defined by triangular points. As such, the elimination or reduction in number of fillets of the fin disclosed fin designs can reduce CAD and build file size and build time.

Fin designs disclosed in FIGS. 2-6 enhance the ability to build complex heat exchanger designs with existing additive manufacturing process constraints (e.g., CAD and build files size, build time, and minimum feature thickness). Additionally, the disclosed fin designs can be used to reduce a weight of the heat exchanger without compromising the life of the part. For example, the disclosed fin designs allow for manufacture of thinner fins without loss to the structural integrity of fins at fin-plate junctions. The disclosed fin designs limit crack propagation to a region between plates 112 and 114 thereby reducing the potential for leakage of interfacing fluids. The disclosed fin designs can also reduce build time through the elimination or reduction in number of fillets. The disclosed fin designs additionally reduce the risk of fin failure causing channel blockages, which would reduce the performance of the heat exchanger.

Although particular fin design embodiments have been disclosed, it will be understood by one of ordinary skill in the art that any of the features disclosed in FIGS. 2-6 can be combined to produce alternative embodiments. For example, fins 516 in FIG. 6 can be segmented and separated by gaps 322 as shown in FIGS. 4 and 5 to prevent cracks from propagating a full length of fin 516. Projecting elements 518 and 519 can be incorporated into heat exchanger portion 100 of FIG. 2 to help confine crack propagation to stress concentration element 118 and limit crack growth toward plates 112 and 114. Load bearing fins 416, as illustrated in FIG. 5 can be incorporated into any number in any of the embodiments illustrated in FIGS. 2-4 and 6.

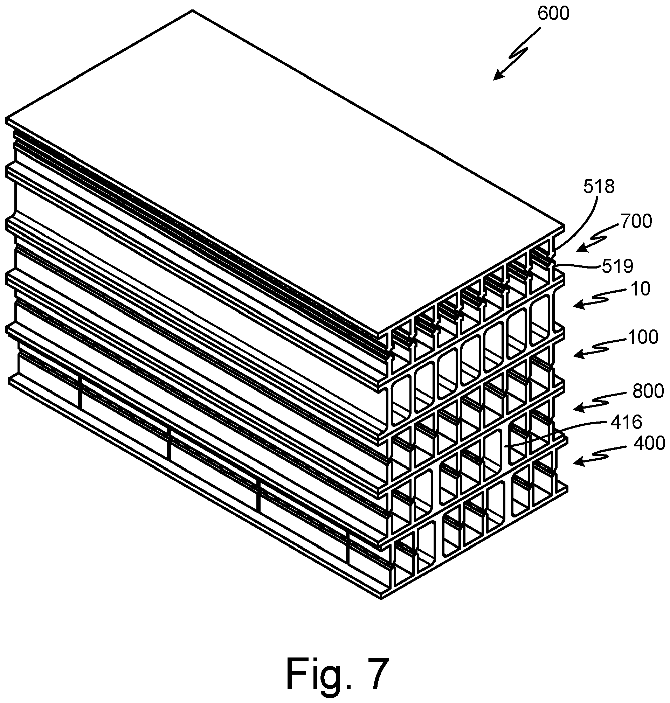

FIG. 7 is an isometric view of heat exchanger section 600. Heat exchanger section 600 includes multiple heat exchanger portions, including 10, 100, 400, 700, and 800 in a stacked arrangement. FIG. 7 is intended to illustrate how fin design can vary from one section of the heat exchanger to another. Heat exchanger sections 10, 100, and 400 were described with respect to FIGS. 1, 2, and 3, respectively. Heat exchanger section 700 is a modification of heat exchanger section 100, which includes projecting members 518 and 519 as described with respect to FIG. 6. Heat exchanger section 800 is a modification of heat exchanger section 200 as described with respect of FIG. 3, including load bearing fins 416 as described with respect to FIG. 5.

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, rotational or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A heat exchanger comprising:
a first plate (112);
a second plate (114) separated from the first plate by a gap (120); and
a first fin (116) disposed across the gap, extending between and connected to each of the first and second plates, wherein the first fin comprises a stress concentration element (118) disposed at a location separated from a first junction connecting the first fin to the first plate and a second junction connecting the first fin to the second plate;
wherein the stress concentration element (118) comprises a region of reduced first fin thickness;
wherein the stress concentration element (118) is disposed over less than 50 percent of a height of the first fin extending between the first and second plates;
wherein the stress concentration element (118) extends parallel to the first and second plates along a length of the first fin; and **characterized in that** the stress concentration element (118) includes a plurality of apertures (220) extending through the first fin.

2. The heat exchanger of claim 1, wherein the stress concentration element (118) is centrally located between the first junction and the second junction; or wherein the stress concentration element (118) is offset from a center location between the first junction and the second junction.

3. The heat exchanger of claim 1 or 2, wherein the apertures are spaced along the length of the first fin.

4. The heat exchanger of any preceding claim, wherein the first fin comprises a first section (130) extending from the first plate to the stress concentration element and a second section (131) extending from the second plate to the stress concentration element, wherein the first and second sections have a first thickness and the stress concentration element has a second thickness less than the first thickness; and optionally wherein each of the first and second sections joins the region of reduced first fin thickness with a chamfer.

5. The heat exchanger of claim 4, wherein the first fin has a first side and a second side disposed opposite the first side and wherein the first side is recessed to form the region of reduced fin thickness; and optionally wherein the second side is recessed to form the region of reduced first fin thickness.

6. The heat exchanger of any of claims 1 to 5, wherein the first fin further comprises a first projecting element (518) and a second projecting element (519) disposed on either side of the stress concentration element, and wherein the first fin has a first thickness at the first and second junctions, a second thickness at the stress concentration element, and a third thickness at the first and second projecting elements, wherein the third thickness is greater than the first thickness and the first thickness is greater than the second thickness; and optionally wherein each of the first and second projecting elements joins the stress concentration element with a chamfer.

7. The heat exchanger of any of any preceding claim, and further comprising a plurality of first fins, wherein the first fins are disposed in rows separated by a fluid flow channel (122) and wherein each row comprises a plurality of first fin segments, wherein adjacent first fin segments are separated by a gap, wherein adjacent first fin segments are separated by a distance less than 0.75 inches (19mm).

8. The heat exchanger of any of claims 1 to 7, and further comprising a second fin extending between and connected to each of the first and second plates, the second fin having a thickness greater than a thickness of the first fin to provide structural support.

9. The heat exchanger of claim 8, and further comprising a plurality of first fins and second fins, wherein second fins of the plurality of second fins are separated by a plurality of first fins.

10. The heat exchanger of claim 8 or 9, wherein the second fin is joined to each of the first and second plates by a fillet.

11. The heat exchanger of any of claims 1 to 10, wherein the first fin has a first thickness at locations adjacent the first and second plates and a second thickness at the location of the stress concentration element and wherein the second thickness is less than half of the first thickness.

12. The heat exchanger of any of claims 1 to 11, wherein first and second plates and the first fin are integrally formed and wherein the first and second junctions are formed without fillets.

## Patentansprüche

1. Wärmetauscher, umfassend:
eine erste Platte (112);
eine zweite Platte (114), die von der ersten Platte durch einen Spalt (120) getrennt ist; und
eine erste Rippe (116), die über dem Spalt angeordnet ist und sich zwischen jeder der ersten und der zweiten Platte erstreckt und mit dieser verbunden ist, wobei die erste Rippe ein Spannungskonzentrationselement (118) umfasst, das an einer Stelle angeordnet ist, die von einer ersten Verbindungsstelle getrennt ist, die die erste Rippe mit der ersten Platte verbindet, und eine zweite Verbindungsstelle, die die erste Rippe mit der zweiten Platte verbindet;
wobei das Spannungskonzentrationselement (118) einen Bereich mit verringerter erster Rippendicke umfasst;
wobei das Spannungskonzentrationselement (118) über weniger als 50 Prozent einer Höhe der ersten Rippe, die sich zwischen der ersten und der zweiten Platte erstreckt, angeordnet ist;
wobei sich das Spannungskonzentrationselement (118) parallel zu der ersten und der zweiten Platte entlang einer Länge der ersten Rippe erstreckt; und **dadurch gekennzeichnet, dass**
das Spannungskonzentrationselement (118) eine Vielzahl von Öffnungen (220), die sich durch die erste Rippe erstrecken, beinhaltet.

2. Wärmetauscher nach Anspruch 1, wobei das Spannungskonzentrationselement (118) zentral zwischen der ersten Verbindungsstelle und der zweiten Verbindungsstelle liegt; oder wobei das Spannungskonzentrationselement (118) von einer zentralen Stelle zwischen der ersten Verbindungsstelle und der zweiten Verbindungsstelle versetzt ist.

3. Wärmetauscher nach Anspruch 1 oder 2, wobei die Öffnungen entlang der Länge der ersten Rippe beabstandet sind.

4. Wärmetauscher nach einem vorstehenden Ansprüche, wobei die erste Rippe einen ersten Abschnitt (130), der sich von der ersten Platte zu dem Spannungskonzentrationselement erstreckt, und einen zweiten Abschnitt (131), der sich von der zweiten Platte zu dem Spannungskonzentrationselement erstreckt, umfasst, wobei der erste und der zweite Abschnitt eine erste Dicke aufweisen, und das Spannungskonzentrationselement eine zweite Dicke, die kleiner als die erste Dicke ist, aufweist; und wobei optional jeder des ersten und des zweiten Abschnitts mit einer Abfasung an den Bereich mit verringerter Dicke der ersten Rippe anschließt.

5. Wärmetauscher nach Anspruch 4, wobei die erste Rippe eine erste Seite und eine zweite Seite, die der ersten Seite entgegengesetzt ist, aufweist, und wobei die erste Seite vertieft ist, um den Bereich mit verringerter Rippendicke zu bilden; und wobei optional die zweite Seite vertieft ist, um den Bereich mit verringerter Rippendicke zu bilden.

6. Wärmetauscher nach einem der Ansprüche 1 bis 5, wobei die erste Rippe ferner ein erstes vorragendes Element (518) und ein zweites vorragendes Element (519) umfasst, die auf jeder Seite des Spannungskonzentrationselements angeordnet sind, und wobei die erste Rippe eine erste Dicke an der ersten und der zweiten Verbindungsstelle, eine zweite Dicke an dem Spannungskonzentrationselement und eine dritte Dicke an dem ersten und dem zweiten vorragenden Element aufweist, wobei die dritte Dicke größer als die erste Dicke ist und die erste Dicke größer als die zweite Dicke ist; und wobei optional jedes des ersten und des zweiten vorragenden Elements mit einer Abfasung an das Spannungskonzentrationselement anschließt.

7. Wärmetauscher nach einem der vorstehenden Ansprüche, der ferner eine Vielzahl erster Rippen umfasst, wobei die ersten Rippen in Reihen angeordnet sind, die durch einen Fluidströmungskanal (122) getrennt sind, und wobei jede Reihe eine Vielzahl erster Rippensegmente umfasst, wobei aneinandergrenzende erste Rippensegmente durch einen Spalt getrennt sind, wobei aneinandergrenzende erste Rippensegmente durch einen Abstand von weniger als 0,75 Zoll (19 mm) getrennt sind.

8. Wärmetauscher nach einem der Ansprüche 1 bis 7, der ferner eine zweite Rippe umfasst, die sich zwischen der ersten und der zweiten Platte erstreckt und mit diesen verbunden ist, wobei die zweite Rippe eine Dicke aufweist, die größer als eine Dicke der ersten Rippe ist, um eine strukturelle Stütze bereitzustellen.

9. Wärmetauscher nach Anspruch 8, der ferner eine Vielzahl erster Rippen und zweiter Rippen umfasst, wobei zweite Rippen der Vielzahl zweiter Rippen durch eine Vielzahl erster Rippen getrennt sind.

10. Wärmetauscher nach Anspruch 8 oder 9, wobei die zweite Rippe mit jeder der ersten und der zweiten Platte durch eine Ausrundung verbunden ist.

11. Wärmetauscher nach einem der Ansprüche 1 bis 10, wobei die erste Rippe eine erste Dicke an Stellen an die erste und die zweite Platte angrenzend und eine zweite Dicke an der Stelle des Spannungskonzentrationselements aufweist, und wobei die zweite Dicke kleiner als die Hälfte der ersten Dicke ist.

12. Wärmetauscher nach einem der Ansprüche 1 bis 11, wobei die erste und die zweite Platte und die erste Rippe einstückig ausgebildet sind, und wobei die erste und die zweite Verbindungsstelle ohne Ausrundungen gebildet sind.

## Revendications

1. Échangeur de chaleur, comprenant :
une première plaque (112) ;
une seconde plaque (114) séparée de la première plaque par un espace (120) ; et
une première ailette (116) disposée à travers l'espace, s'étendant entre chacune des première et seconde plaques et connectée à chacune de celles-ci, dans lequel la première ailette comprend un élément de concentration de contraintes (118) disposé à un emplacement séparé d'une première jonction reliant la première ailette à la première plaque et une seconde jonction reliant la première ailette à la seconde plaque ;
dans lequel l'élément de concentration de contraintes (118) comprend une région de première épaisseur d'ailette réduite ;
dans lequel l'élément de concentration de contraintes (118) est disposé sur moins de 50 % d'une hauteur de la première ailette s'étendant entre les première et seconde plaques ;
dans lequel l'élément de concentration de contraintes (118) s'étend parallèlement aux première et seconde plaques sur une longueur de la première ailette ; et **caractérisé en ce que** l'élément de concentration de contraintes (118) comporte une pluralité d'ouvertures (220) s'étendant à travers la première ailette.

2. Échangeur de chaleur selon la revendication 1, dans lequel l'élément de concentration de contraintes (118) est situé au centre entre la première jonction et la seconde jonction ; ou dans lequel l'élément de concentration de contraintes (118) est décalé d'un emplacement central entre la première jonction et la seconde jonction.

3. Échangeur de chaleur selon la revendication 1 ou 2, dans lequel les ouvertures sont espacées sur la longueur de la première ailette.

4. Échangeur de chaleur selon une quelconque revendication précédente, dans lequel la première ailette comprend une première section (130) s'étendant de la première plaque à l'élément de concentration de contraintes et une seconde section (131) s'étendant de la seconde plaque à l'élément de concentration de contraintes, dans lequel les première et seconde sections ont une première épaisseur et l'élément de concentration de contraintes a une deuxième épaisseur inférieure à la première épaisseur ; et éventuellement dans lequel chacune des première et seconde sections joint la région de première épaisseur d'ailette réduite avec un chanfrein.

5. Échangeur de chaleur selon la revendication 4, dans lequel la première ailette a un premier côté et un second côté disposé à l'opposé du premier côté et dans lequel le premier côté est évidé pour former la région d'épaisseur d'ailette réduite ; et éventuellement dans lequel le second côté est évidé pour former la région de première épaisseur d'ailette réduite.

6. Échangeur de chaleur selon l'une quelconque des revendications 1 à 5, dans lequel la première ailette comprend en outre un premier élément saillant (518) et un second élément saillant (519) disposés de part et d'autre de l'élément de concentration de contraintes, et dans lequel la première ailette a une première épaisseur au niveau des première et seconde jonctions, une deuxième épaisseur au niveau de l'élément de concentration de contraintes, et une troisième épaisseur au niveau des premier et second éléments saillants, la troisième épaisseur étant supérieure à la première épaisseur et la première épaisseur étant supérieure à la deuxième épaisseur ; et éventuellement dans lequel chacun des premier et second éléments saillants joint l'élément de concentration de contraintes avec un chanfrein.

7. Échangeur de chaleur selon une quelconque revendication précédente, et comprenant en outre une pluralité de premières ailettes, dans lequel les premières ailettes sont disposées en rangées séparées par un canal d'écoulement de fluide (122) et dans lequel chaque rangée comprend une pluralité de premiers segments d'ailettes, dans lequel les premiers segments d'ailette adjacents sont séparés par un espace, dans lequel les premiers segments d'ailette adjacents sont séparés par une distance inférieure à 0,75 pouce (19 mm).

8. Échangeur de chaleur selon l'une quelconque des revendications 1 à 7, et comprenant en outre une seconde ailette s'étendant entre chacune des première et seconde plaques et connectée à chacune de celles-ci, la seconde ailette ayant une épaisseur supérieure à une épaisseur de la première ailette pour fournir un support structurel.

9. Échangeur de chaleur selon la revendication 8, et comprenant en outre une pluralité de premières ailettes et de secondes ailettes, dans lequel les secondes ailettes de la pluralité de secondes ailettes sont séparées par une pluralité de premières ailettes.

10. Échangeur de chaleur selon la revendication 8 ou 9, dans lequel la seconde ailette est jointe à chacune des première et seconde plaques par un congé.

11. Échangeur de chaleur selon l'une quelconque des revendications 1 à 10, dans lequel la première ailette a une première épaisseur à des emplacements adjacents aux première et seconde plaques et une deuxième épaisseur à l'emplacement de l'élément de concentration de contraintes et dans lequel la deuxième épaisseur est inférieure à la moitié de la première épaisseur.

12. Échangeur de chaleur selon l'une quelconque des revendications 1 à 11, dans lequel les première et seconde plaques et la première ailette sont formées d'un seul tenant et dans lequel les première et seconde jonctions sont formées sans congés.
